# EUROPÄISCHE PATENTANMELDUNG

(11) **EP 1 595 902 A1**
(43) Veröffentlichungstag der Anmeldung: **16.11.2005**
(21) Anmeldenummer: 04102004.1
(22) Anmeldetag: 10.05.2004
(51) Int. Cl.: C08G 18/12, C09J 175/04, C08G 18/76, C08G 18/16

(54) **Polyurethanzusammensetzung mit hoher Frühfestigkeit**

(71) Anmelder: Sika Technology AG, 6340 Baar (CH)
(72) Erfinder: Bosshard, Bernhard, 5453, Remetschwil (CH); Schlumpf, Michael, 8143, Stallikon (CH)
(74) Vertreter: Isler, Jörg

(57) **Zusammenfassung**

Die vorliegende Erfindung betrifft Polyurethanzusammensetzungen, welche sich insbesondere als Klebstoffe eignen, die im gesamten Temperaturbereich zwischen -10°C und +35 °C über einen exzellenten Festigkeitsaufbau verfügen und andererseits gut applizierbar sind. Insbesondere sind im Rahmen der vorliegende Erfindung Klebstoffe mit exzellentem Crashverhalten formulierbar.

## Beschreibung

### Technisches Gebiet

Die Erfindung betrifft Polyurethanzusammensetzungen, welche auch für Applikationen bei tiefen Temperaturen geeignet sind und über eine hohe Frühfestigkeit verfügen. Insbesondere betrifft die Erfindung Klebstoffe für das Verkleben von Fahrzeugscheiben.

### Stand der Technik

Polyurethanklebstoffe werden seit langem im Automobil- und Fahrzeugbau verwendet. Unter anderen werden solche Klebstoffe auch für das Verkleben von Verglasungen eingesetzt und stellen einkomponentige feuchtigkeitshärtende Polyurethanklebstoffe dar. Die Verglasungen werden einerseits beim Fahrzeugbau an der Linie eingesetzt oder aber durch Garagen oder Scheibenersatzfirmen im Falle einer Reparatur einer defekten Verglasung. Speziell in weniger dicht besiedelten Gebieten ist ein Ersatz einer Scheibe auf der Strasse von Nöten, weshalb die Umgebungstemperatur ein wichtiger Faktor für den Einsatz eines Scheibenklebstoffes für eine erfolgreiche Scheibenreparatur darstellt. Diese einkomponentige feuchtigkeitshärtenden Polyurethanklebstoffe weisen sehr lange, typischerweise über Tage gehende, klimaabhängige Aushärtungszeiten auf.

Mit dem Aufkommen von Airbags als Schutzeinrichtungen für die Insassen trat beim Verkleben von Fahrzeugscheiben ein neues Problem auf. Da sich ein Airbag bei einem Aufprall mit grosser Geschwindigkeit und Kraft entfaltet und sich hierbei für den Schutz der Insassen auf die Scheibe abstützt, ist die Verklebung zu einem sicherheitsrelevanten Teil des Fahrzeuges geworden und die Verklebung einer reparierten Scheibe muss bereits bei der Wiederinbetriebnahme des Fahrzeuges eine genügend grosse Festigkeit aufgebaut haben, um die Kräfte eines ausgelösten Airbags und den Impuls der Fahrzeuginsassen im Eventualfall eines Fahrzeug-Crashes unbeschadet zu überstehen und dadurch die Schutzfunktion des Airbags aufrechtzuerhalten.

Für die Realisierung von solch crashtauglichen Scheibenklebestoffen ist deshalb ein schneller Festigkeitsaufbau von äusserster Wichtigkeit. Ein schneller Festigkeitsaufbau kann chemisch oder physikalisch erfolgen. Ein chemisch erfolgter, schneller Festigkeitsaufbau kann mittels 2-KomponentenKlebstoffe erzielt werden, indem die zwei Komponenten schnell miteinander reagieren und das Fahrzeug bereits nach kurzer Zeit wieder fahrbereit ist. Allerdings ist die Applikation solcher zwei-komponentiger Systeme, wie beispielsweise 2 K-PUR, sehr aufwendig, kundenunfreundlich und zuweilen kritisch bezüglich der Mischfehler. Eine Umgehung dieser Schwierigkeiten bieten zwar die heisshärtenenden 1-Komponentenklebstoffe, bei denen durch den Temperatur-Einfluss ein Katalysatoren frei wird, oder bei denen durch den Temperatur-Einfluss aus zuvor inerten blockierten Verbindungen Substanzen freigesetzt werden, durch die Vernetzung von reaktiven Komponenten ermöglicht wird. Dies bedingt jedoch, dass der Klebstoff aufgeheizt werden muss. Damit ein solcher Klebstoff auch bei warmen Temperaturen lagerfähig ist, muss eine solche Hitzehärtung bei relativ hohen Temperaturen erfolgen. Diese Notwendigkeit führt jedoch dazu, dass von solchen Klebstoffen nicht auf kalte beziehungsweise hitzeempfindliche Substrate appliziert werden können und das Risiko eines Versagens der Verklebung dadurch massiv erhöht wird.

Das Prinzip des physikalischen Festigkeitsaufbaus ist zum Beispiel in Hotmelt-Klebstoffen realisiert. Diese Klebstoffe sind primär aus einer Schmelzkomponente aufgebaut, welche bei der Applikationstemperatur schmelzen, auf das Substrat aufgetragen werden und beim Abkühlen wieder erstarren. Der Schmelz-Abkühl-Vorgang ist ein reversibler Prozess. Um zu verhindern, dass eine Verklebung durch Schmelzen des Klebstoffes bei höherer Umgebungstemperatur verloren geht, wird in Hotmelt-Klebstoffen die Schmelztemperatur üblicherweise hoch gewählt. Diese hohe Schmelztemperatur führt jedoch auch hier zum Nachteil, dass ein Hotmelt auf kalten Substraten nicht angewendet werden kann, weil der Klebstoff schneller abkühlt, als dass sich die Haftung aufbauen kann. Abgesehen davon, dass Hotmelt-Klebstoff schlecht geeignet sind für das Verkleben von hitze-empfindlichen Substraten ist ein grosser Nachteil, dass diese Klebstoffe einen Aufheizvorgang mit geeignetem Equipment benötigen und, bedingt durch ihren plastischen Charakter unter Langzeitbelastungen, kriechen.

Reaktive Schmelzklebstoffe vereinen die physikalische und chemische Härtung. Solche reaktive Schmelzklebstoffe sind bekannt und bestehen typischerweise aus einer Schmelzkomponente die reaktive Gruppen, beispielsweise Isocyanatgruppen enthalten. Für die Applikation müssen diese Klebstoff aufgeschmolzen werden, was typischerweise bei Temperaturen über 60°C erfolgt. Nach dem Applizieren kühlen diese Klebstoffe ab, wodurch sich die Klebstoffe verfestigen und anschliessend mit Luftfeuchtigkeit nachvernetzen. Solche Klebstoffe sind beispielsweise aus EP 0 705 290 bekannt. Nachteilig bei dieser Art ist jedoch, dass der Klebstoff aufgeheizt werden muss, weil diese Art Klebstoff unter der Verflüssigungstemperatur nicht applizierbar sind. Weiterhin sind keine reaktiven Schmelzklebstoffe bekannt, die genügend schnell Festigkeit im Temperaturbereich zwischen -10°C und 35°C aufbauen, um einen Crash zu überstehen.

### Darstellung der Erfindung

Aufgabe der vorliegenden Erfindung war es, eine Polyurethanzusammensetzung zur Verfügung zu stellen, die es ermöglicht, Verklebungen zu gestalten, die sowohl bei tiefen als auch hohen Temperaturen gleichzeitig einen genügenden schnellen Festigkeitsaufbau aufweisen und andererseits auch gut applizierfähig sind.

Überraschenderweise wurde gefunden, dass dies mit der erfindungsgemässen Polyurethanzusammensetzung gemäss Anspruch 1 möglich ist.

Die erfindungsgemässe Polyurethanzusammensetzung eignen sich überaus gut als Klebstoff. Sie zeichnen sich insbesondere durch die Kombination eines schnellen Festigkeitsaufbaues und guter Applizierfähigkeit sowohl bei tiefen und bei hohen Temperaturen aus. Dieser Effekt ist besonderes wichtig im Temperaturfenster zwischen -10 und 35°C, insbesondere zwischen 5 und 35°C. Dies wird erreicht durch einen Klebstoff, der sich in diesem Temperaturbereich durch eine vergleichbar geringen Viskositätsanstieg auszeichnet und auch bei tiefen Temperaturen eine genügend hohe und bei hohen Temperaturen eine nicht zu schnelle Reaktivität aufweist. Die erfindungsgemässe Polyurethanzusammensetzung benötigt keiner Zumischung einer zweiten Komponente, um einen schnellen Festigkeitsaufbau zu erreichen.

Vorteilhafte Ausführungsformen der Erfindung weisen den Vorteil auf, dass die Applikation der Polyurethanzusammensetzung ohne ein vorgängiges Aufheizen möglich ist und im Klimafenster von -10°C bis 35°C klimaunabhängige Wegfahrzeiten realisiert werden. Dies ist besonders in den Fällen günstig, wo die Zusammensetzung für eine Reparatur verwendet wird.

Weitere vorteilhafte Ausgestaltungen der Erfindung ergeben sich aus den Unteransprüchen.

### Wege zur Ausführung der Erfindung

Die vorliegende Erfindung betrifft Polyurethanzusammensetzungen, welche mindestens einen Polyurethanprepolymer **A**, mindestens einen Katalysator **B1** und mindestens einen Katalysator **B2**, Russ, mindestens eine Verbindung **C** der Formel (I) sowie gegebenenfalls ein Polyurethanprepolymer D, gegebenenfalls ein Polyurethanprepolymer **E,** gegebenenfalls ein Polyurethanprepolymer **F,** gegebenenfalls ein aliphatisches Polyisocyanat **G** sowie gegebenenfalls eine pyrogene Kieselsäure umfassen.

Die Vorsilbe "Poly" in "Polyol" und "Polyisocyanat" bedeutet im gesamten vorliegenden Dokument, dass jeweils zwei oder mehr der jeweiligen funktionellen Gruppe in dem Molekül vorhanden ist.

Die Polyurethanzusammensetzung umfasst weiterhin mindestens ein Polyurethanprepolymer **A.** Das Polyurethanprepolymer **A** weist Isocyanatendgruppen auf und ist hergestellt aus mindestens einem aromatischen Polyisocyanat und mindestens einem Polyoxyalkylenpolyol **A1.**

Die Polyurethanzusammensetzung umfasst weiterhin mindestens einen Katalysator **B1** und einen Katalysator **B2.** Der Katalysator **B1** weist mindestens eine tertiäre Amingruppe auf. Insbesondere ist der Katalysator **B1** 1,4-Diazabicyclo[2.2.2]octan (DABCO) und ein Dimorpholinoether. Besonders bevorzugt sind Dimorpholinoether, insbesondere Dimorpholinoether, wie sie mit der Formel auf Seite 3 Zeilen 1 bis 18 in EP 0 812 866 A1 beschrieben sind, sowie 2,2'-Dimorpholinodiethylether (DMDEE). Besonders bevorzugt ist 2,2'-Dimorpholinodiethylether.

Weiterhin umfasst die Polyurethanzusammensetzung mindestens einen Katalysator **B2.** Der Katalysator **B2** ist ein Zinnkatalysator, das heisst, dass dieser Katalysator Zinn enthält. Insbesondere ist der Zinnkatalysator **B2** ausgewählt aus der Gruppe der Zinnverbindungen umfassend Dibutylzinndiacetat, Dibutylzinndilaurat, Dioctylzinndicarboxylat, Dibutylzinndichlorid oder Mischungen davon.

Bevorzugt handelt es sich beim Zinnkatalysator **B2** um Dibutylzinndiacetat oder Dibutylzinndilaurat (DBTL).

Typischerweise liegt das Gewichts-Verhältnis von **B1/B2** zwischen 30/70 bis 99/1, insbesondere zwischen 50/50 bis 99/1, bevorzugt zwischen 55/45 bis 98/2, insbesondere zwischen 55/45 bis 90/10.

Für das Wesen der Erfindung ist diese Katalysatoren-Kombination **B1/B2** wichtig, denn es konnte gezeigt werden, dass mit dieser Kombination die gewünschte Tieftemperaturreaktivität erreicht werden kann, ohne dass bei hoher Temperatur das System so schnell ist, dass es nicht mehr im üblichen Applikationsfenster von etwa 5 Minuten appliziert und die beiden Teile gefügt werden können.

Die Polyurethanzusammensetzung umfasst weiterhin 5 bis 40 Gew. -%, insbesondere 5 bis 30 Gew. -%, Russ, bezogen auf das Gewicht der Polyurethanzusammensetzung. Russ ist ein in der Polyurethanchemie bestens bekannter Bestandteil von Klebstoffen. Bevorzugt besitzt der Russ eine möglichst kleine Teilchengrösse.

Die Polyurethanzusammensetzung umfasst weiterhin mindestens eine Verbindung **C** der Formel (I)

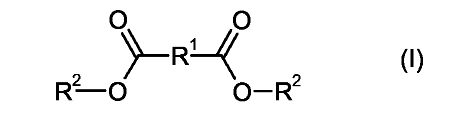

R¹ stellt hierbei eine C₃- bis C₈-Alkylengruppe dar. Besonders bevorzugt stellt R¹ eine Propylen, Butylen- oder eine Heptylen- oder eine Octylengruppe dar.

R² stellt eine C₇- bis C₁₃-Alkylgruppe dar. Diese Alkylgruppen können verzweigt oder nicht verzweigt sein, bevorzugt sind sie jedoch nicht verzweigt. Bevorzugt ist diese Alkylgruppe eine C₇-, C₈- oder eine C₉- Alkylgruppe, insbesondere eine C₈-Alkylgruppe.

Die zwei Reste R² in Formel sind bevorzugt identisch. Bevorzugt ist die Verbindung **C** ein Dialkyladipat, insbesondere Dioctyladipat (DOA).

In einer bevorzugten Ausführungsform umfasst die Polyurethanzusammensetzung weiterhin mindestens eine Verbindung **C'** der Formel (I')

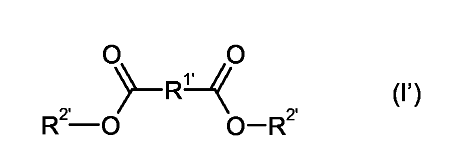

R^{1'} stellt hierbei eine,gegebenenfalls substituierte,Phenylengruppe dar.

R^{2'} stellt eine C₇- bis C₁₃-Alkylgruppe dar. Diese Alkylgruppen können verzweigt oder nicht verzweigt sein, bevorzugt sind sie jedoch verzweigt. Bevorzugt ist diese Alkylgruppe eine C₉- oder ein C₁₀- Alkylgruppe, insbesondere eine iso-Nonyl- oder iso-Decylgruppe.

Die zwei Reste R^{2'} in Formel sind bevorzugt identisch. Bevorzugt ist die Verbindung **C'** ein Dialkylphtalat, insbesondere Diisodecylphtalat (DIDP).

Besonders bevorzugt enthält die Polyurethanzusammensetzung Dioctyladipat als Verbindung **C** und Diisodecylphtalat als Verbindung **C'.**

Die Polyurethanzusammensetzung umfasst weiterhin gegebenenfalls ein Polyurethanprepolymer **D.** Das Polyurethanprepolymer **D** weist Isocyanatendgruppen auf und wird aus mindestens einem Polyisocyanat und mindestens einem Polyesterpolyol hergestellt. Der Gehalt an Polyurethanprepolymer **D,** bezogen auf das Gewicht der Polyurethanzusammensetzung, beträgt 0 bis 4 Gew.- %, insbesondere 1 bis 4 Gew.-%.

Die Polyurethanzusammensetzung umfasst weiterhin gegebenenfalls ein Polyurethanprepolymer **E.** Das Polyurethanprepolymer **E** weist Isocyanatendgruppen auf und wird aus mindestens einem Polyisocyanat und mindestens einem Polycarbonatpolyol hergestellt. Der Gehalt an Polyurethanprepolymer **E,** bezogen auf das Gewicht der Polyurethanzusammensetzung, beträgt 0 bis 20 Gew.- %, insbesondere 1 bis 15 Gew.-%.

Die Polyurethanzusammensetzung umfasst weiterhin gegebenenfalls ein Polyurethanprepolymer **F.** Das Polyurethanprepolymer **F** weist Isocyanatendgruppen auf und wird aus mindestens einem aliphatischen Polyisocyanat und mindestens einem Polyoxyalkylenpolyol **F1** hergestellt. Der Gehalt an Polyurethanprepolymer **F,** bezogen auf das Gewicht der Polyurethanzusammensetzung, beträgt 0 bis 15 Gew.- %, insbesondere 1 bis 10 Gew.-%.

Die Polyurethanzusammensetzung umfasst weiterhin gegebenenfalls ein aliphatischen Polyisocyanates **G.** Das aliphatische Polyisocyanat **G** ist ein aliphatisches NCO-gruppentragendes Isocyanurat und/oder ein aliphatisches NCO-gruppentragendes Biuret. Bevorzugt handelt es sich beim Polyisocyanat **G** um ein Isophorondiisocyanat(IPDI)-Isocyanurat und/oder ein 1,6-Hexamethylendiisocyanat(HDI)-Biuret. Als besonders bevorzugt ist in der Polyurethanzusammensetzung eine Mischung eines IPDI-Isocyanurat und eines HDI-Biurets. Der Gehalt an Polyisocyanat **G,** bezogen auf das Gewicht der Polyurethanzusammensetzung, beträgt 0 bis 4 Gew.- %, insbesondere 0.2 bis 2.5 Gew.-%.

Bei der Herstellung der Polyurethanprepolymere **A, D, E** und **F** werden das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht, wobei das Polyisocyanat so dosiert ist, dass dessen Isocyanatgruppen im Verhältnis zu den Hydroxylgruppen des Polyols im stöchiometrischen Überschuss vorhanden sind. Der Überschuss an Polyisocyanat wird so gewählt, dass im resultierenden Polyurethanprepolymer nach der Umsetzung aller Hydroxylgruppen des Polyols ein Gehalt an freien Isocyanatgruppen von 0.1 bis 15 Gewichts-%, bevorzugt 0.5 bis 5 Gewichts-%, bezogen auf das gesamte Polyurethanprepolymer, verbleibt. Gegebenenfalls kann das Polyurethanprepolymer unter Mitverwendung von Lösemitteln oder Weichmachern hergestellt werden, wobei die verwendeten Lösemittel oder Weichmacher keine gegenüber Isocyanaten reaktive Gruppen enthalten.

Das Polyisocyanat für die Herstellung des Polyurethanprepolymers **A** ist ein aromatisches Polyisocyanat. Das Polyisocyanat für die Herstellung des gegebenenfalls vorhandenen Polyurethanprepolymer **D** und des gegebenenfalls vorhandenen Polyurethanprepolymers **E** kann ebenfalls ein aromatisches Polyisocyanat sein.

Die Verwendung des aromatischen Polyisocyanates in der Herstellung des Polyurethanprepolymers **A** ist sehr wichtig, um eine hohe Reaktivität zu gewährleisten.

Das aromatische Polyisocyanat ist, jeweils unabhängig von den Polyisocyanaten für die Verwendung von anderen vorhandenen Polyurethanprepolymeren, bevorzugt ausgewählt aus der Gruppe umfassend 2,4- und 2,6-Toluylendiisocyanat (TDI) und beliebige Gemische dieser Isomeren, 4,4'-Diphenylmethandiisocyanat (MDI) und deren Mischungen sowie all deren Isomeren und Oligomere.

Das Polyisocyanat für die Herstellung des Polyurethanprepolymers **F** ist ein aliphatisches Polyisocyanat. Das Polyisocyanat für die Herstellung des gegebenenfalls vorhandenen Polyurethanprepolymer **D** und des gegebenenfalls vorhandenen Polyurethanprepolymers **E** kann ebenfalls ein aliphatisches Polyisocyanat sein.

Das aliphatische Polyisocyanat ist, jeweils unabhängig von den Polyisocyanaten für die Verwendung von anderen vorhandenen Polyurethanprepolymeren, bevorzugt ausgewählt aus der Gruppe umfassend 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Cyclohexan-1,3- und -1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), sowie Oligomere und Polymere der vorgenannten Isocyanate, sowie beliebige Mischungen der vorgenannten Isocyanate.

Für die Herstellung der Polyurethanprepolymere **A, D, E** und **F** werden Polyole eingesetzt. Insbesondere werden Diole und Triole eingesetzt.

Für die Polyurethanprepolymere **D** werden Polyesterpolyole verwendet. Geeignete Polyesterpolyole sind beispielsweise hergestellt aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.

Besonders geeignet gezeigt haben sich Polyesterpolyol, welche hergestellt werden aus einem Diol, insbesondere aus einem Alkylendiol, bevorzugt Hexandiol, und einer Dicarbonsäure, insbesondere Adipinsäure sowie Polyesterpolyole hergestellt aus Lactonen, insbesondere Caprolactonen, bevorzugt ε-Caprolacton, sowie Mischungen davon.

Für die Polyurethanprepolymere **E** werden Polycarbonatpolyole verwendet. Solche Polycarbonatpolyole werden typischerweise aus den oben beschriebenen- zum Aufbau der Polyesterpolyole eingesetzten - Alkoholen und Dialkylcarbonaten, Diarylcarbonaten oder Phosgen hergestellt. Besonderes geeignet haben sich Polycarbonatpolyole gezeigt, welche aus Dialkylcarbonaten, insbesondere Dimethylcarbonat, und Alkylendiolen, insbesondere 1,6-Hexandiol, herstellbar sind.

Für die Herstellung der Polyurethanprepolymere **A** und **F** werden Polyoxyalkylenpolyole **A1** und **F1** eingesetzt.

Polyoxyalkylenpolyole werden vom Fachmann auch Polyetherpolyole genannt und sind Polymerisationsprodukte von Ethylenoxid, 1,2-Propylenoxid, 1,2- oder 2,3-Butylenoxid, Tetrahydrofuran oder Mischungen davon und werden eventuell mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin sowie Mischungen der vorgenannten Verbindungen polymerisiert. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten.

Besonders geeignet sind Polyoxyalkylendiole oder Polyoxyalkylentriole.

Speziell geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxypropylendiole und -triole mit einem Molekulargewicht von 400 bis 8'000 g/mol. Unter "Molekulargewicht" oder "Molgewicht" versteht man im vorliegenden Dokument stets das Molekulargewichtsmittel Mₙ.

Ebenfalls besonders geeignet sind sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.

Die Polyoxyalkylenpolyole **A1** und **F1** können gleich oder verschieden voneinander sein. Bevorzugt sind die Polyoxyalkylenpolyole **A1** und **F1** verschieden voneinander.

Bevorzugt ist das Polyoxyalkylenpolyol **A1** und gegebenenfalls das Polyoxyalkylenpolyol **F1** ein Polyoxyethylenpolyol oder ein Poly(oxyethylen/oxypropylen)polyol, insbesondere ein Polyethylenglycol. Bei den Poly(oxyethylen/oxypropylen)polyol ist das EO/PO-Verhältnis, das heisst das Verhältnis der Ethylenoxid(=EO)-Einheiten zu Propylen(=PO)-Einheiten, insbesondere von mehr als 10 mol/90 mol, bevorzugt zwischen 10 mol/90 mol und 35 mol/65 mol.

In einer bevorzugten Ausführungsform ist **A1** ein Polyoxyalkylentriol, insbesondere ein EO/PO-Triol.

In einer bevorzugten Ausführungsform ist **F1** ein Polyoxypropylenpolyol, insbesondere ein Polyoxypropylendiol.

Die Polyurethanzusammensetzung umfasst weiterhin gegebenenfalls pyrogene Kieselsäure. Der Gehalt an pyrogener Kieselsäure, bezogen auf das Gewicht der Polyurethanzusammensetzung, beträgt 0 bis 4 Gew.- %, insbesondere 0.5 bis 3 Gew.-%. Es gibt unterschiedliche geeignete kommerziell erhältliche pyrogene Kieselsäuren, beispielsweise unter dem Namen AEROSIL® von Degussa oder WACKER HDK® von Wacker Chemie GmbH.

Schliesslich kann die Polyurethanzusammensetzung noch andere Bestandteile umfassen wie Lösemittel; anorganische und organische Füllstoffe, wie zum Beispiel gemahlene oder gefällte Calciumcarbonate, welche gegebenenfalls mit Stearaten beschichtet sind, Kaoline, Aluminiumoxide und PVC-Pulver; Fasern, beispielsweise aus Polyethylen; Pigmente; Rheologie-Modifizierer wie beispielsweise Verdickungsmittel, zum Beispiel Harnstoffverbindungen, Polyamidwachse oder Bentonite; Haftvermittler, insbesondere Silane wie Epoxysilane, Vinylsilane, Isocyanatosilane und mit Aldehyden zu Aldiminosilanen umgesetzte Aminosilane; Trocknungsmittel wie beispielsweise p-Tosylisocyanat und andere reaktive Isocyanate, Orthoameisensäureester, Calciumoxid oder Molekularsiebe; Stabilisatoren gegen Wärme, Licht- und UV-Strahlung; flammhemmende Substanzen; oberflächenaktive Substanzen wie beispielsweise Netzmittel, Verlaufsmittel, Entlüftungsmittel oder Entschäumer; Fungizide oder das Pilzwachstum hemmende Substanzen; sowie weitere, in der Polyurethanindustrie üblicherweise eingesetzte Substanzen.

Die Polyurethanzusammensetzung härtet mit Wasser, insbesondere als Luftfeuchtigkeit, aus. Deshalb kommt die Polyurethanzusammensetzung bevorzugt als feuchtigkeitshärtende einkomponentige Zusammensetzung zum Einsatz. Es ist aber durchaus denkbar, dass die Zusammensetzung mit einem Härter, welcher eine Verbindung enthält, welche mit Isocyanat reaktiv ist, insbesondere Polyamin oder Polyol, eine zweikomponentige Zusammensetzung darstellen kann. Eine Formulierung als zweikomponentige Zusammensetzung hätte den Vorteil, dass die Aushärtung schneller erfolgen würde.

Die Polyurethanzusammensetzung kommt insbesondere als Kleb- oder Dichtstoff, insbesondere als Scheibenklebstoff, zum Einsatz.

Hierbei wird die Polyurethanzusammensetzung auf die Oberfläche eines ersten Substrates appliziert, anschliessend wird die Polyurethanzusammensetzung mit einer Oberfläche eines zweiten Substrates kontaktiert und dann erfolgt das Aushärten der Polyurethanzusammensetzung.

Das erste und/oder zweite Substrat ist bevorzugt aus einem Material, welches ausgewählt aus der Gruppe umfassend Glas, Glaskeramik, Lack, Stahl, Aluminium, Polycarbonat, ABS, GFK und Polypropylen ist. Besonders bevorzugt ist das eine Substrat eine Scheibe, insbesondere eine Fahrzeugscheibe. Das andere Substrat ist bevorzugt ein Lack, insbesondere ein lackiertes Blech, bevorzugt ein lackierter Flansch. Die Polyurethanzusammensetzung wird typischerweise auf eine Fahrzeugscheibe in Form einer Raupe appliziert und anschliessend wird die Fahrzeugscheibe mit der auf angebrachten Polyurethanzusammensetzung auf einen Flansch der Fahrzeugkarosse gedrückt und ausgehärtet.

Das erste und/oder zweite Substrat kann vor der Applikation des Klebstoffs einer Vorbehandlung unterworfen werden. Eine solche Vorbehandlung kann von chemischer, physikalischer oder physiko-chemischer Art sein. Insbesondere kommen das Aufrauen der Oberfläche oder das Entfernen von Verschmutzungen durch Schleifen, Bürsten oder Abwischen als physikalische Vorbehandlung in Frage. Als chemische Vorbehandlung gelten beispielsweise das Reinigen mit Lösungsmittel, Ätzen, das Behandeln mit Haftvermittlerlösungen, Primerzusammensetzungen oder Reinigungsmitteln. Die physiko-chemischen Vorbehandlungsmethoden sind beispielsweise Plasmabehandlung, Koronabehandlung oder Plasmagun-Behandlung.

Besonderes bevorzugt wird das erste und/oder zweite Substrat, zumindest im Verklebungsbereich, vor dem Applizieren der Polyurethanzusammensetzung mit einer Haftvermittlerlösung, welche mindestens ein Alkoxysilan und/oder mindestens ein Alkoxytitanat, bevorzugt eine Mischung eines Alkoxysilans und eines Alkoxytitanates, umfasst, vor der Verklebung vorbehandelt.

Die Herstellung und Lagerung der Polyurethanzusammensetzung, erfolgt insbesondere unter Ausschluss von Feuchtigkeit. Die Polyurethanzusammensetzung ist lagerstabil, d.h. sie kann in einer geeigneten Verpackung oder Anordnung, wie beispielsweise in einem Fass, einem Beutel oder einer Kartusche, vor ihrer Anwendung typischerweise während mehreren Monaten bis zu einem Jahr und länger aufbewahrt werden, ohne dass sie ihre Anwendbarkeit verlieren.

Die erfindungsgemässe Polyurethanzusammensetzung zeichnen sich insbesondere durch die Kombination eines schnellen Festigkeitsaufbaues und guter Applizierfähigkeit aus. Im Rahmen der vorliegenden Erfindung sind sowohl kalt, warm als auch heiss applizierbare Klebstoffe realisierbar. In bevorzugten Ausführungsformen der Erfindung zeichnen sich die Klebstoffe durch die Kombination eines schnellen Festigkeitsaufbaues und guter Applizierfähigkeit sowohl bei tiefen und bei hohen Temperaturen aus.

Dieser Effekt ist besonderes wichtig im Temperaturfenster zwischen - 10 und +35°C, insbesondere zwischen 0 und 35°C, besonders zwischen 5°C und 35°C. Dies wird erreicht durch einen Klebstoff, der in diesem Temperaturbereich sich durch einen vergleichbar geringen Viskositätsanstieg auszeichnet und auch bei tiefen Temperaturen eine genügend hohe Reaktivität aufweist.

Der Klebstoff muss nicht - wie beispielsweise reaktive Hotmelts - vor der Applikation zuerst aufgeheizt werden, oder - wie beispielsweise zweikomponentige Polyurethanklebstoffe - mit einer zweiten Komponente vor der Applikation aufwändig gemischt werden. Diese Vorteile sind besonders in den Fällen günstig, wo der Klebstoff für eine Reparatur verwendet wird. Es kann deshalb beispielsweise eine Fahrzeugscheibe auf der Strasse repariert werden, ohne dass der Reparateur einen Ofen im Service-Fahrzeug mitführen muss oder gar das Pannenfahrzeug in eine Garage bringen muss, wo die hierfür nötige Reparaturaustattung vorhanden ist. Dies bringt dem Kunden den grossen Vorteil, dass einerseits weniger Kosten für die Reparatur anfallen und andererseits, dass vor allem der Kunde durch die Reparatur weniger Zeit verliert, da die Scheibe vor Ort, das heisst, auf der Strasse, erfolgen kann. Dieser Vorteil ist vor allem in Ländern wichtig, die über eine kleine Dichte an Reparaturwerkstätten verfügen. Das Wegfallen vom Zumischen einer zweiten Komponente bringt vor allem logistische und verfahrenssicherheitstechnische Vorteile, denn es muss einerseits nicht überprüft werden, ob jeweils auch die zweite Komponente vorrätig ist und andererseits muss nicht peinlich darauf geachtet werden, dass das vorgeschriebene Mischungsverhältnis eingehalten wird. Es ist nämlich bekannt, dass bei Zweikomponenten-Polyurethanen ein Abweichen von wenigen Prozenten im Mischverhältnis bereits massive Änderungen der Produkteeigenschaften mit sich bringt.

Für die Applikationsfähigkeit ist besonders die Viskosität der Polyurethanzusammensetzung und deren Temperaturabhängigkeit wesentlich. Bevorzugt weist die Polyurethanzusammensetzung bei der Applikationstemperatur, insbesondere bei 20°C, eine dynamische Viskosität zwischen 3'500 und 15'000Pas, insbesondere zwischen 3'500 und 10'000Pas, bevorzugt zwischen 3'500 und 6'000 Pas auf.

In einer besonders bevorzugten Ausführungsform weist die Polyurethanzusammensetzung ein Verhältnis der dynamischen Viskositäten der Polyurethanzusammensetzung bei 5°C und 35°C η_{5°}/η_{35°} = 1.5 - 4.5, insbesondere = 2.0 - 3.5, sowie eine Frühfestigkeit, gemessen bei einer Messgeschwindigkeit von 200 mm/min, bei 5°C und 80% rel. Luftfeuchtigkeit (r.h.) nach 1 Stunde von grösser als 10 N/cm², insbesondere von grösser als 15 N/cm², bevorzugt grösser als 20 N/cm², mehr bevorzugt grösser als 40 N/cm², auf.

Für die Frühfestigkeit ist vor allem auch die Hochgeschwindigkeitsfestigkeit von Bedeutung. Diese Frühfestigkeit, welche für das Verhalten in einem Crash relevant ist, kann beispielsweise mittels Schlagpendelversuche ermittelt werden. Die erfindungsgemässen Polyurethanzusammensetzungen weisen hierbei äusserst gute Festigkeitswerte auf, die typischerweise -bei einer Prüfgeschwindigkeit von 1 m/s des Pendels- nach 60 Minuten in jedem Klima aus dem relevanten Klimabereich, insbesondere in jedem der Klima ausgewählt aus der Klimagruppe umfassend 5°C / 80% r.h., 23°C / 50% r.h. und 35°C / 20% r.h., über 0.6 MPa, insbesondere über 1 MPa, liegen. Die 0.6 MPa können hierbei als kritische Grenze für die Belastung in einem Crash betrachtet werden.

### Beispiele

### Herstellung der Polyurethanzusammensetzungen

Es wurden aus 4,4'-MDI und den in den in Tabelle 1 angegebenen Polyolen Isocyanat-terminierte Prepolymere unter Feuchtigkeitsausschluss gemäss dem Verfahren, wie es dem Fachmann bekannt ist, hergestellt.

Zur Herstellung der angegebenen Zusammensetzungen wurden alle flüssigen Komponenten, ausser den Katalysatoren, vorgelegt, unter Rühren und Feuchtigkeitsausschluss gegebenenfalls das geschmolzene Polyesterprepolymer zugegeben und die weiteren Bestandteile gemäss Tabelle 1 zugegeben. Nach dem Abkühlen wurden die homogen vermischten Zusammensetzungen in Aluminiumkartuschen abgefüllt.

**Tabelle 1:**

| Zusammensetzungen. | | | |
|---|---|---|---|
| **Beispiele** | ***1*** | ***2*** | ***Ref.1*** |
| Polyurethanprepolymere **A** und **D** | | | |
| Desmophen 5036 BT (Bayer AG) [Gew.-%] | 25.6 | 25.6 | 25.6 |
| Acclaim® 2220N(Bayer AG) [Gew.-%] | 5.47 | 5.47 | - |
| Acclaim® 4200N(Bayer AG) [Gew.-%] | 6.22 | 4.8 | 13.07 |
| Dynacoll® 7360 (Degussa AG) [Gew.-%] | | 1.2 | - |
| 4,4-MDI [Gew.-%] | 5.71 | 5.73 | 5.63 |
| | | | |
| Desmodur N3300 **G** [Gew.-%] | | 0.2 | |
| DOA **C** [Gew.-%] | 11.6 | 7.9 | - |
| DIDP **C**'[Gew.-%] | 8.92 | 8.74 | 19.4 |
| Russ [Gew.-%] | 20 | 28 | 20 |
| Kaolin [Gew.-%] | 16 | 12 | 16 |
| DBTL **B2** [Gew.-%] | 0.2 | 0.15 | 0.3 |
| DMDEE/DMPEG* (3/4=w/w) **B1** [Gew.-%] | 0.28 | 0.21 | - |

| | | | |
|---|---|---|---|
| *DMPEG (Dimorpholino-Polyethylenglykolether) gemäss EP 0 812 866 A1. | | | |

Der Referenzklebstoff ***Ref.1*** enthält keine Katalysatormischung **B1/B2** und keine Verbindung der Formel **C**. Der Referenzklebstoff ***Ref.2*** ist der kommerzielle Polyurethanklebstoff SikaTack®-Ultrafast (kommerziell erhältlich bei Sika Schweiz AG), welche eine nicht-erfindungsgemässe Zusammensetzung aufweist und eines der schnellsten 1-komponentigen Polyurethansysteme auf dem Markt darstellt.

### Messverfahren

- Viskosität:
   Die Viskosität der Polyurethanzusammensetzung wurde mittels Rheomat Physica MCR 300 der Firma Paar Physica, Platte/Platte mit einer Scherrate von 1sec⁻¹ unter Feuchtigkeitsausschluss (Stickstoffüberlagerung) bei einer Temperatur von 5°C, 23°C und 35°C ermittelt.
- Frühfestigkeit (FOG) 200 mm/min:
   Die Frühfestigkeit (FOG) wurde mittels eines Zwick Prüfgerätes durch Stirnzug mit einer Messgeschwindigkeit von 200 mm/min nach einer Aushärtungszeit von 1 Stunde bei 5°C/80 % relativer Luftfeuchtigkeit, 23°C/50 % relativer Luftfeuchtigkeit beziehungsweise 35°C/20 % relativer Luftfeuchtigkeit, gemessen. Die Glasprüfkörper (Rocholl Deutschland) wurden vor der Verklebung mit Sika® Aktivator (kommerziell erhältlich bei Sika Schweiz AG) vorbehandelt
- Frühfestigkeit (GS) 1 m/s:
   Die Frühfestigkeit (GS) wurde mittels Schlagpendel (Pendellänge 75 cm, Gewicht des Schlaghammers 24 kg) nach einer Aushärtungszeit von 1 Stunde bei 5°C/80 % relativer Luftfeuchtigkeit, 23°C/50 % relativer Luftfeuchtigkeit beziehungsweise 35°C/20 % relativer Luftfeuchtigkeit ermittelt. Die Auslenkung wurde derart gewählt, dass das Pendel mit 1 m/s auf einen der zwei Fügeteilen des verklebten Probekörpers auftrat. In Anlehnung an ISO 14343 wurden die am anderen Fügeteil auftretenden Kräfte mit einer Kraftaufnehmer gemessen, aufgezeichnet und aus der maximalen Kraft die angegebene Frühfestigkeit ermittelt.

### Resultate

**Tabelle 2.**

| Resultate | | | | |
|---|---|---|---|---|
| | ***1*** | ***2*** | ***Ref.1*** | ***Ref.2*** |
| Klebstofftemperatur bei Applikation [°C] | 23 | 80 | 23 | 80 |
| Frühfestigkeit (FOG) 200 mm/mim [N/cm²] | | | | |
| 1 h 5°C / 80% rel. Luftfeuchtigkeit | 14.1 | 18.3 | 2.2 | 8.4 |
| 1 h 23°C / 50% rel. Luftfeuchtigkeit | 31.2 | 39.1 | 14.4 | 20 |
| 1 h 35°C / 20% rel. Luftfeuchtigkeit | 36.2 | 41.8 | 23.3 | 20.6 |
| Frühfestigkeit (GS)1 m/s [MPa] | | | | |
| 1 h 5°C / 80% rel. Luftfeuchtigkeit | 0.62 | 1.29 | 0.22 | 0.69 |
| 1 h 23°C / 50% rel. Luftfeuchtigkeit | 0.81 | 1.09 | 0.47 | 0.51 |
| 1 h 35°C / 20% rel. Luftfeuchtigkeit | 0.78 | 1.01 | 0.59 | 0.50 |
| Viskosität (η) [Pas] | | | | |
| 5°C | 6600 | 47000 | 5400 | 17800 |
| 20°C | 3780 | 27000 | 3460 | 11400 |
| 35°C | 2910 | 11000 | 3120 | 9000 |
| η_{5°}/η_{35°} | 2.27 | 4.27 | 1.73 | 1.98 |

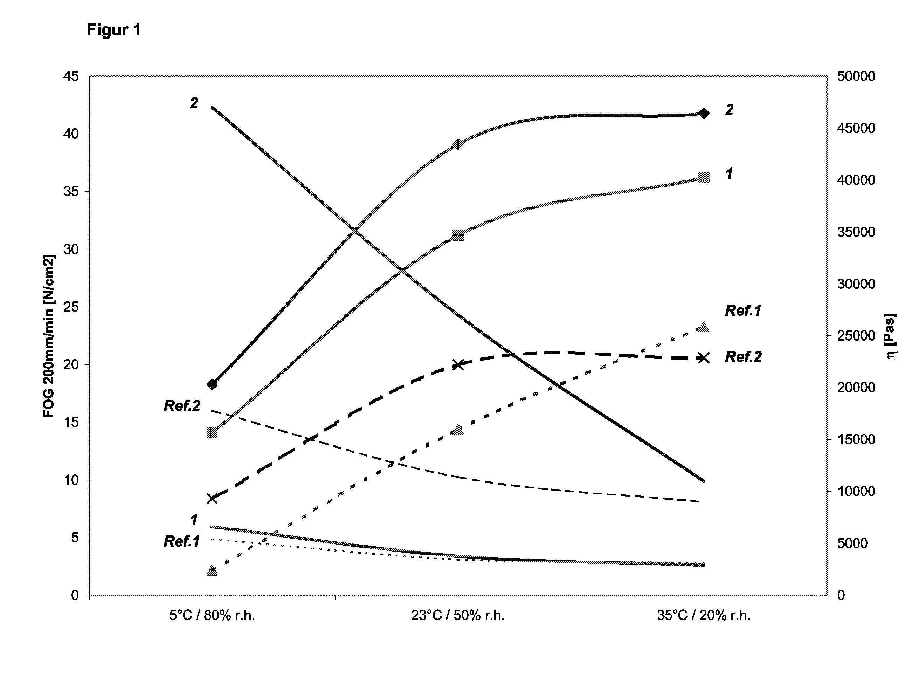

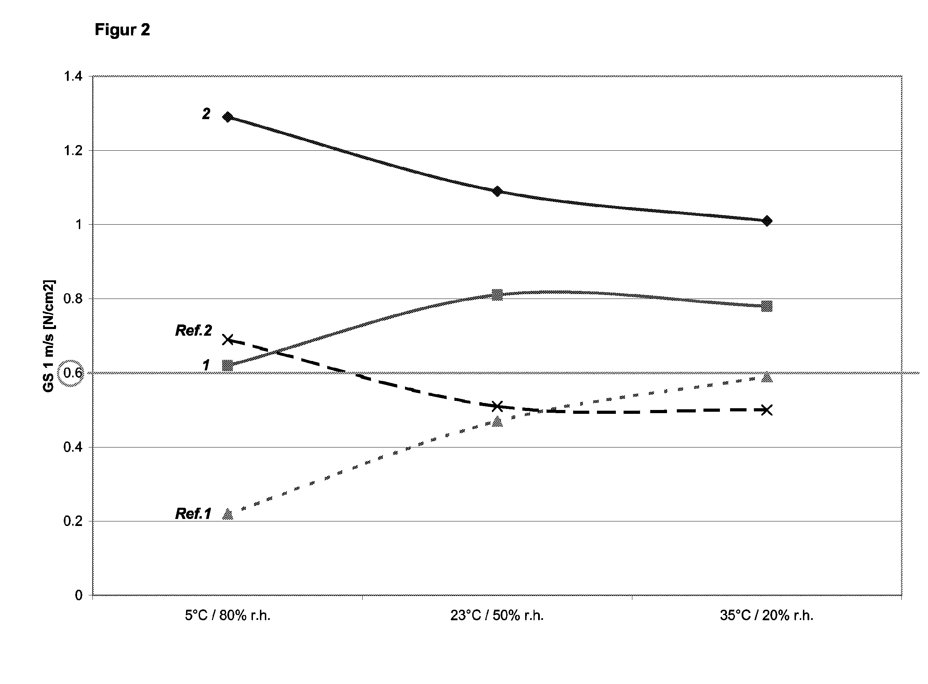

Tabelle 2 und Figuren 1 und 2 zeigen das Verhalten der erfindungsgemässen Klebstoffe ***1*** und ***2*** im Gegensatz zu den Referenzklebstoffen ***Ref.1*** und ***Ref.2.*** Der Klebstoff ***Ref.1*** verfügt zwar über eine akzeptables Viskositätsverhalten für eine Kaltapplikation, allerdings ist der Festigkeitsaufbau generell zu gering. Im Gegensatz zu den beiden Referenzklebstoffen ***Ref.1*** und ***Ref.2*** weisen gemäss Tabelle und Figur 2 die erfindungsgemässen Klebstoffe ***1*** und 2 bei hoher Prüfgeschwindigkeit, welche die Situation eines Crashes simulieren, über allen Temperatur/Klimabereichen durchwegs einen Wert über 0.6 MPa.

Klebstoff **1** ist ein kaltapplizierbarer Klebstoff und weist über den gesamten Temperaturbereich ein exzellente Viskosität auf. Weiterhin verfügt er über einen sehr schnellen Festigkeitsaufbau und erhöhte Crashfestigkeit.

Klebstoff **2** stellt gegenüber Klebstoff **1** ein Beispiel eines Klebstoffs dar, welcher warm appliziert wird, aber einen exzellenten Festigkeitsaufbau und Crashverhalten aufweist.

## Patentansprüche

1. Polyurethanzusammensetzung umfassend
- mindestens ein Polyurethanprepolymer **A** mit Isocyanatendgruppen, hergestellt aus mindestens einem aromatischen Polyisocyanat und mindestens einem Polyoxyalkylenpolyol **A1**;
- mindestens ein Katalysator **B1** mit mindestens einer tertiären Amingruppe;
- mindestens ein Zinnkatalysator **B2**;
- 5 bis 40 Gew.-% Russ, bezogen auf das Gewicht der Polyurethanzusammensetzung;
- mindestens eine Verbindung **C** der Formel (I) 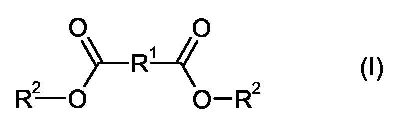 wobei R¹ eine C₃-C₈ Alkylengruppe darstellt,
und R² eine C₇-C₁₃ Alkylgruppe darstellt, die gegebenenfalls verzweigt ist;
- 0 bis 4 Gew.-% eines Polyurethanprepolymers **D** mit Isocyanatendgruppen, hergestellt aus mindestens einem Polyisocyanat und mindestens einem Polyesterpolyol, bezogen auf das Gewicht der Polyurethanzusammensetzung;
- 0 bis 20 Gew.-% eines Polyurethanprepolymers **E** mit Isocyanatendgruppen, hergestellt aus mindestens einem Polyisocyanat und mindestens einem Polycarbonatpolyol, bezogen auf das Gewicht der Polyurethanzusammensetzung;
- 0 bis 15 Gew.-% eines Polyurethanprepolymers F mit Isocyanatendgruppen, hergestellt aus mindestens einem aliphatischen Polyisocyanat und mindestens einem Polyoxyalkylenpolyol **F1**;
- 0 bis 4 Gew.-% eines aliphatischen Polyisocyanates **G**, bezogen auf das Gewicht der Polyurethanzusammensetzung;
- 0 bis 4 Gew.-% einer pyrogenen Kieselsäure.

2. Polyurethanzusammensetzung gemäss Anspruch 1, **dadurch gekennzeichnet, dass** die Polyurethanzusammensetzung einkomponentig und feuchtigkeitshärtend ist.

3. Polyurethanzusammensetzung gemäss Anspruch 1 oder 2, **dadurch gekennzeichnet, dass** das Polyoxyalkylenpolyol **A1** und gegebenenfalls das Polyoxyalkylenpolyol **F1** ein Polyoxyethylenpolyol oder ein Poly(oxyethylen/oxypropylen)polyol, insbesondere ein Polyethylenglycol, ist.

4. Polyurethanzusammensetzung gemäss Anspruch 3, **dadurch gekennzeichnet, dass** das Polyoxyalkylenpolyol Poly(oxyethylen/oxypropylen)polyol ist mit einem EO/PO-Verhältnis von mehr als 10 mol/90 mol, bevorzugt von zwischen 10 mol/90 mol und 35mol/65 mol.

5. Polyurethanzusammensetzung gemäss Anspruch 1 oder 2, **dadurch gekennzeichnet, dass** das Polyoxyalkylenpolyol F1 ein Polyoxypropylenpolyol ist.

6. Polyurethanzusammensetzung gemäss einem der vorhergehenden Ansprüche, **dadurch gekennzeichnet, dass** das Polyisocyanat für die Herstellung des Polyurethanprepolymers **A** und gegebenenfalls **D** und gegebenenfalls **E** unabhängig von einander ein aromatisches Polyisocyanat, ausgewählt aus der Gruppe umfassend 2,4- und 2,6-Toluylendiisocyanat (TDI) und beliebige Gemische dieser Isomeren, 4,4'-Diphenylmethandiisocyanat (MDI) und deren Mischungen sowie all deren Isomeren und Oligomere, ist.

7. Polyurethanzusammensetzung gemäss einem der vorhergehenden Ansprüche, **dadurch gekennzeichnet, dass** der Katalysator **B1** 1,4-Diazabicyclo[2.2.2]octan (DABCO) oder ein Dimorpholinoether, insbesondere 2,2'-Dimorpholinodiethylether (DMDEE), ist.

8. Polyurethanzusammensetzung gemäss einem der vorhergehenden Ansprüche, **dadurch gekennzeichnet, dass** der Zinn-Katalysator **B2** ausgewählt ist aus der Gruppe der Zinnverbindungen umfassend Dibutylzinndiacetat, Dibutylzinndilaurat, Dioctylzinndicarboxylat, Dibutylzinndichlorid oder Mischungen davon.

9. Polyurethanzusammensetzung gemäss einem der vorhergehenden Ansprüche, **dadurch gekennzeichnet, dass** die Verbindung **C**, ein Dialkyladipat, insbesondere Dioctyladipat, ist.

10. Polyurethanzusammensetzung gemäss einem der vorhergehenden Ansprüche, **dadurch gekennzeichnet, dass** die Polyurethanzusammensetzung zusätzlich mindestens eine Verbindung **C**' der Formel (I') enthält 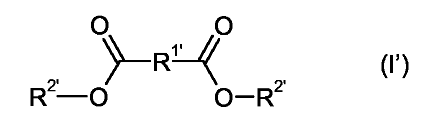 wobei R^{1'} eine, gegebenenfalls substituierte, Phenylengruppe darstellt,
und R^{2'} eine C₇-C₁₃ Alkylgruppe darstellt, die gegebenenfalls verzweigt ist.

11. Polyurethanzusammensetzung gemäss Anspruch 10, **dadurch gekennzeichnet, dass** die Verbindung **C'**, ein Dialkylphtalat, insbesondere Diisodecylphtalat, ist.

12. Polyurethanzusammensetzung gemäss einem der vorhergehenden Ansprüche, **dadurch gekennzeichnet, dass** das Polyesterpolyol des Polyurethanprepolymer **D** aus einem Diol, insbesondere aus einem Alkylendiol, bevorzugt Hexandiol, und einer Dicarbonsäure, insbesondere Adipinsäure hergestellt wird oder ein Polyesterpolyol ist, das aus Lactonen, insbesondere Caprolacton, hergestellt wird.

13. Polyurethanzusammensetzung gemäss einem der vorhergehenden Ansprüche, **dadurch gekennzeichnet, dass** das Polyisocyanat für die Herstellung des Polyurethanprepolymers **F** und gegebenenfalls **D** und gegebenenfalls **E** ein aliphatisches Polyisocyanat, ausgewählt aus der Gruppe umfassend 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Cyclohexan-1,3-und -1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), sowie Oligomere und Polymere der vorgenannten Isocyanate, sowie beliebige Mischungen der vorgenannten Isocyanate, ist.

14. Polyurethanzusammensetzung gemäss einem der vorhergehenden Ansprüche, **dadurch gekennzeichnet, dass** der Anteil des Polyurethanprepolymers **D** 1 bis 4 Gew.-%, bezogen auf das Gewicht der Polyurethanzusammensetzung, beträgt.

15. Polyurethanzusammensetzung gemäss einem der vorhergehenden Ansprüche, **dadurch gekennzeichnet, dass** das aliphatische Polyisocyanat **G** ein aliphatisches NCO-gruppentragendes Isocyanurat und/oder ein aliphatisches NCO-gruppentragendes Biuret, insbesondere ein Isophorondiisocyanat(IPDI)-Isocyanurat und/oder ein 1,6-Hexamethylendiisocyanat(HDI)-Biuret, ist.

16. Polyurethanzusammensetzung gemäss einem der vorhergehenden Ansprüche, **dadurch gekennzeichnet, dass** der Anteil des aliphatischen Polyisocyanates **G** 0.2 bis 4 Gew.-%, bezogen auf das Gewicht der Polyurethanzusammensetzung, beträgt.

17. Polyurethanzusammensetzung gemäss einem der vorhergehenden Ansprüche, **dadurch gekennzeichnet, dass** das Verhältnis der dynamischen Viskositäten der Polyurethanzusammensetzung bei 5°C und 35°C η_{5°}/η_{35°} = 1.5 - 4.5, insbesondere = 2.0 - 3.5, und die Frühfestigkeit der Polyurethanzusammensetzung bei einer Messgeschwindigkeit von 200 mm/min bei 5°C und 80% rel. Luftfeuchtigkeit nach 1 Stunde grösser als 10 N/cm², insbesondere grösser als 15 N/cm², bevorzugt grösser als 20 N/cm², noch mehr bevorzugt grösser als 40 N/cm², ist.

18. Polyurethanzusammensetzung gemäss einem der vorhergehenden Ansprüche, **dadurch gekennzeichnet, dass** die dynamische Viskosität der Polyurethanzusammensetzung bei der Applikationstemperatur, insbesondere bei 20°C zwischen 3'500 und 15'000 Pas, insbesondere zwischen 3'500 und 10'000Pas, bevorzugt zwischen 3'500 und 6'000Pas ist.

19. Polyurethanzusammensetzung gemäss einem der vorhergehenden Ansprüche, **dadurch gekennzeichnet, dass** die Polyurethanzusammensetzung nach 60 Minuten eine Frühfestigkeit von mehr als 0.6 MPa, insbesondere von mehr als 1 MPa, gemessen mit Schlagpendel bei einer Messgeschwindigkeit von 1 m/s, aufweist in jedem der Klima ausgewählt aus der Klimagruppe umfassend 5°C / 80% r.h., 23°C / 50% r.h. und 35°C / 20% r.h.

20. Verwendung der Polyurethanzusammensetzung gemäss einem der Ansprüche 1 bis 19, als Kleb- oder Dichtstoff, insbesondere als Scheibenklebstoff.

21. Verfahren zum Verkleben von Scheiben umfassend die Schritte
- Applizieren der Polyurethanzusammensetzung gemäss einem der Ansprüche 1 bis 19 auf die Oberfläche eines ersten Substrates,
- Kontaktieren der Polyurethanzusammensetzung mit einer Oberfläche eines zweiten Substrates,
- Aushärtung der Polyurethanzusammensetzung.

22. Verfahren gemäss Anspruch 21, **dadurch gekennzeichnet, dass** das erste oder das zweite Substrat aus einem Material ist, welches ausgewählt aus der Gruppe umfassend Glas, Glaskeramik, Lack, Stahl, Aluminium, Polycarbonat, ABS, GFK und Polypropylen ist.

23. Verfahren gemäss Anspruch 21 oder 22, **dadurch gekennzeichnet, dass** das erste und/oder zweite Substrat vor der Verklebung einer Vorbehandlung chemischer, physikalischer oder physiko-chemischer Art unterworfen wird.

24. Verfahren gemäss einem der Ansprüche 21 bis 23, **dadurch gekennzeichnet**, das erste Substrat eine Scheibe, insbesondere eine Fahrzeugscheibe, ist.

25. Verfahren gemäss Anspruch 24, **dadurch gekennzeichnet, dass** die Scheibe vor dem Applizieren der Polyurethanzusammensetzung zumindest im Verklebungsbereich mit einer Haftvermittlerlösung, welche mindestens ein Alkoxysilan und/oder mindestens ein Alkoxytitanat, bevorzugt eine Mischung eines Alkoxysilans und eines Alkoxytitanates, umfasst, behandelt worden ist.
